# EUROPÄISCHE PATENTSCHRIFT

(11) **EP 3 408 429 B1**
(45) Veröffentlichungstag und Bekanntmachung des Hinweises auf die Patenterteilung: **26.02.2020**
(21) Anmeldenummer: 17702563.2
(22) Anmeldetag: 25.01.2017
(51) Int. Cl.: C25B 1/00, C25B 3/04, C25B 9/08, C25B 15/08

(54) **VERFAHREN UND VORRICHTUNG ZUR ELEKTROCHEMISCHEN NUTZUNG VON KOHLENSTOFFDIOXID**
METHOD AND DEVICE FOR THE ELECTROCHEMICAL UTILIZATION OF CARBON DIOXIDE
PROCÉDÉ ET DISPOSITIF POUR L'UTILISATION ÉLECTROCHIMIQUE DE DIOXYDE DE CARBONE

(30) Priorität: 10.03.2016 DE 102016203946
(43) Veröffentlichungstag der Anmeldung: 05.12.2018
(73) Patentinhaber: Siemens Aktiengesellschaft, 80333 München (DE)
(72) Erfinder: STARK, Katharina, 91052 Erlangen (DE); BALDAUF, Manfred, 91056 Erlangen (DE); HANEBUTH, Marc, 90482 Nürnberg (DE)
(86) Internationale Anmeldenummer: PCT/EP2017/051469
(87) Internationale Veröffentlichungsnummer: WO 2017/153081

(56) Entgegenhaltungen:
- US-A- 3 959 094
- US-A- 4 673 473

## Beschreibung

Die vorliegende Erfindung betrifft ein Verfahren und eine Vorrichtung zur elektrochemischen Verwertung von Kohlenstoffdioxid. Kohlenstoffdioxid wird in eine Elektrolysezelle eingeleitet und an einer Kathode reduziert.

Die Nachfrage nach Strom schwankt im tagezeitlichen Verlauf stark. Auch die Stromerzeugung schwankt mit zunehmendem Anteil an Strom aus erneuerbaren Energien während des Tagesverlaufs. Um ein Überangebot an Strom in Zeiten mit viel Sonne und starkem Wind bei niedriger Nachfrage nach Strom ausgleichen zu können, benötigt man regelbare Kraftwerke oder Speicher, um diese Energie zu speichern.

Eine der derzeitig angedachten Lösungen ist das Umwandeln von elektrischer Energie in Wertprodukte, die insbesondere als Plattformchemikalien, insbesondere Ethen, Methan oder Ethan, oder Synthesegas, welches Kohlenstoffmonoxid und Wasserstoff umfasst, dienen können. Eine mögliche Technik zur Umwandlung der elektrischen Energie in Wertprodukte stellt die Elektrolyse dar.

Die Elektrolyse von Wasser zu Wasserstoff und Sauerstoff stellt eine im Stand der Technik bekannte Methode dar. Aber auch die Elektrolyse von Kohlenstoffdioxid zu Kohlenstoffmonoxid wird seit einigen Jahren erforscht und es gibt Bemühungen, ein elektrochemisches System zu entwickeln, das eine Kohlenstoffdioxidmenge entsprechend des wirtschaftlichen Interesses reduzieren kann. Aktuell werden ca. 80 % des weltweiten Energiebedarfs durch die Verbrennung von fossilen Brennstoffen gedeckt, deren Verbrennungsprozesse eine weltweite Emission von etwa 34000 Millionen Tonnen Kohlenstoffdioxid in die Atmosphäre pro Jahr verursacht. Kohlenstoffdioxid gehört zu den sogenannten Treibhausgasen, deren negative Auswirkungen auf die Atmosphäre und das Klima diskutiert werden.

Eine Verwertung dieses Kohlenstoffdioxids ist daher wünschenswert.

US 4,673,473 und US 3,959,094 offenbaren Vorrichtungen für die Elektrolyse von Kohlenstoffdioxid.

Eine vorteilhafte Bauform einer Elektrolyseeinheit ist ein Niedertemperatur-Elektrolyseur bei dem als Produktgas Kohlenstoffdioxid mit Hilfe einer Gasdiffusionselektrode in einen Kathodenraum zu dosiert wird. An einer Kathode der elektrochemischen Zelle wird das Kohlenstoffdioxid zu Kohlenstoffmonoxid reduziert und an einer Anode wird Wasser zu Sauerstoff oxidiert. Aufgrund von Diffusionslimitierungen an der Kathode kann es beim Einsatz eines wässrigen Elektrolyten neben der Bildung von Kohlenstoffmonoxid auch zur Bildung von Wasserstoff kommen, da das Wasser des wässrigen Elektrolyten ebenfalls elektrolysiert wird. Im derzeitigen Stand der Technik werden maximal 70% des eingesetzten Kohlenstoffdioxids elektrochemisch umgesetzt. Nimmt man einen Umsatzgrad von Kohlenstoffdioxid von 50% an und beachtet man, dass die Faraday-Effizienz für Kohlenstoffmonoxid und Wasserstoff bei jeweils 50% liegt, ergibt sich ein Produktgas mit einer Zusammensetzung von Kohlenstoffmonoxid zu Wasserstoff zu Kohlenstoffdioxid im Verhältnis 1:1:1.

Als Wertprodukt zum Speichern elektrischer Energie ist aber ein möglichst geringer Anteil an nicht umgesetztem Kohlenstoffdioxid in dem Produktgas erstrebenswert. Ein Abtrennen des nicht umgesetzten Kohlenstoffdioxids ist daher notwendig. Dieses Abtrennen ist nachteiliger Weise energieintensiv.

Es ist daher Aufgabe der vorliegenden Erfindung ein Verfahren und eine Vorrichtung anzugeben, bei der nicht umgesetztes Kohlenstoffdioxid energiearm vom Produktgas einer Elektrolyseeinheit abgetrennt wird.

Die Aufgabe wird mit einem Verfahren gemäß Anspruch 1 und einer Vorrichtung gemäß Anspruch 8 gelöst.

Das erfindungsgemäße Verfahren zur elektrochemischen Nutzung von Kohlenstoffdioxid umfasst folgende Schritte: Zunächst erfolgt ein Bereitstellen einer Kohlenstoffdioxid-Elektrolysezelle mit einem ersten Anodenraum und einem ersten Kathodenraum, wobei der erste Anodenraum und der erste Kathodenraum von einer ersten Membran getrennt werden, wobei eine Kathode derart im ersten Kathodenraum angeordnet ist, dass sie einen ersten Kathodenteilraum und einen zweiten Kathodenteilraum trennt, wobei der erste Kathodenteilraum an die erste Membran grenzt. Anschließend wird ein erster Elektrolyt als erster Katholyt in den ersten Kathodenteilraum geführt. Das Kohlenstoffdioxid wird in den zweiten Kathodenteilraum geführt. In dem zweiten Kathodenteilraum wird das Kohlenstoffdioxid zu einem ersten Produktgas reduziert. Das erste Produktgas verlässt getrennt von dem während der Reduktion des Kohlenstoffdioxids basisch gewordenen ersten Katholyts die Kohlenstoffdioxid-Elektrolysezelle. Nach der Kohlenstoffdioxid-Elektrolysezelle werden das erste Produktgas und der basische erste Katholyt zusammengeführt. Das nicht reduzierte Kohlenstoffdioxid wird dann vom ersten Produktgas mittels des basischen ersten Katholyts als Absorptionsmittel abgetrennt.

Die Vorrichtung zur elektrochemischen Nutzung von Kohlenstoffdioxid umfasst eine Kohlenstoffdioxid-Elektrolysezelle zum Reduzieren von Kohlenstoffdioxid zu einem ersten Produktgas, wobei die Kohlenstoffdioxid-Elektrolysezelle einen ersten Anodenraum und einen ersten Kathodenraum umfasst, wobei zwischen dem ersten Anodenraum und dem ersten Kathodenraum eine Membran angeordnet ist und wobei in dem ersten Kathodenraum eine flächige Kathode einen ersten von einem zweiten Kathodenteilraum trennt, wobei der erste Kathodenteilraum an die erste Membran grenzt. Weiterhin umfasst die Vorrichtung eine erste Leitung in den zweiten Kathodenteilraum zum Führen des Kohlenstoffdioxids in den zweiten Kathodenteilraum. Weiterhin umfasst die Vorrichtung eine zweite Leitung in den ersten Kathodenteilraum zum Führen eines ersten Elektrolyten als erster Katholyt. Eine vierte Leitung führt vom ersten Kathodenteilraum in eine Gaswäschevorrichtung zum Führen des basischen ersten Katholyts. Eine fünfte Leitung führt vom zweiten Kathodenteilraum in die Gaswäschevorrichtung zum Führen des ersten Produktgases und des nicht in der Kohlenstoffdioxid-Elektrolysezelle reduzierten Kohlenstoffdioxids. Weiterhin umfasst die Vorrichtung eine Gaswäschevorrichtung zum Abtrennen des nicht reduzierten Kohlenstoffdioxids zum ersten Produktgas mittels des ersten Katholyts.

Vorteilhaft wird in dem erfindungsgemäßen Verfahren und der erfindungsgemäßen Vorrichtung ausgenutzt, dass in der Kohlenstoffdioxid-Elektrolysezelle eine Veränderung des pH-Wertes des Katholyts und auch eines Anolyts erfolgt. Wird bei der Kohlenstoffdioxid-Elektrolyse ein wässriger Elektrolyt mit einem Leitsalz, insbesondere Kaliumsulfat oder ein Ammoniumsalz, eingesetzt, kommt es bei der Elektrolyse zu einem vorwiegenden Transport von Kaliumionen statt von Wasserstoffionen durch die Membran. Die im Anolyt verbliebenen Protonen führen bei fehlender Pufferkapazität des Anolyts zu einer starken Erniedrigung des pH-Wertes. Auch im Katholyt kommt es zu einer Veränderung des pH-Wertes. Durch das Führen des Kohlenstoffdioxids im zweiten Kathodenteilraum ohne direkten Kontakt zum Katholyt im ersten Kathodenteilraum kommt es im Katholyt nicht zu einem Carbonatgleichgewicht, das sich bei einem Führen des Kohlenstoffdioxids durch den Katholyt direkt einstellen würde. Die Pufferwirkung des Kaliumhydrogencarbonats nach Gleichung 1 kann somit nicht stattfinden. Die durch die Reduktion von Kohlenstoffdioxid, bzw. Wasser im Falle der Nebenreaktion, entstehen Hydroxidionen reichern sich an, so dass der pH-Wert des Katholyts ansteigt, bzw. basisch wird.

K⁺+OH⁻+CO₂ → KHCO₃ (GL 1)

Werden nun der basisch gewordene Katholyt und das Produktgas mit dem nicht reduzierten Kohlenstoffdioxid in einer Gaswäschevorrichtung zusammengebracht, so wirkt der basische Katholyt als Absorptionsmittel für das Kohlenstoffdioxid und nimmt dieses aus der Gasphase auf. Das Produktgas, welches insbesondere Kohlenstoffmonoxid und das in einer elektrochemischen Nebenreaktion aus dem Wasser des wässrigen Elektrolyten entstandene Wasserstoff, umfasst, ist nun von Kohlenstoffdioxid gereinigt.

Durch das Fehlen der Pufferwirkung des Kohlenstoffdioxids in dem ersten Kathodenteilraum selbst, wird der pH-Effekt vorteilhaft deutlich verstärkt, so dass der pH-Wert stark basisch wird. Das Zusammenführen des basischen Katholyts mit dem mit nicht reagiertem Kohlenstoffdioxid verunreinigtem Produktgas in der Gaswäschevorrichtung führt dann vorteilhaft zu einer sehr effektiven Absorption des Kohlenstoffdioxids in den Katholyten als Absorptionsmittel. Dadurch, dass der Katholyt und das zu reinigende Produktgas getrennt voneinander aus der Kohlenstoffdioxid-Elektrolysezelle in die Gaswäschevorrichtung geführt werden, stellt sich vorteilhaft erst in der Gaswäschevorrichtung ein thermodynamisches Gleichgewicht ein. Dadurch ist die Qualität der Trennung gegenüber einer gemeinsamen Führung deutlich erhöht. Dies führt zu einem energieoptimierten Prozess. Diese Aufreinigung des Produktgases ist also vorteilhaft sehr energiearm möglich, da der Einsatz energieaufwändiger Heiz- oder Kühlvorrichtungen vermieden wird. Besonders vorteilhaft wird hier die Zufuhr eines zusätzlichen Absorptionsmittels vermieden. Das Absorptionsmittel kann weiterhin sehr leicht regeneriert werden, so dass das gebundene Kohlenstoffdioxid wieder frei wird und im Prozess wiederverwendet werden kann. Vorteilhaft ist das Verfahren somit auch unter ökonomischen Aspekten sehr günstig. Energie wird auch deshalb gespart, da die Vermeidung des zusätzlichen Absorptionsmittels weitere Trennschritte einspart.

Das Trennen des Katholyts vom Produkt- und Eduktgas ist möglich, da das Kohlenstoffdioxid in den zweiten Kathodenteilraum getrennt vom Katholyt, der im ersten Kathodenteilraum vorliegt, an der Kathode vorbeigeführt wird. Die Reaktion des Kohlenstoffdioxids zu Kohlenstoffmonoxid findet an der Kathode in Kontakt zum Katholyt statt. Durch eine geringe Druckdifferenz zwischen dem Kohlenstoffdioxid und dem Katholyt, der relative Druck des Kohlenstoffdioxids ist etwas größer, verbleibt der Katholyt nahezu vollständig im ersten Kathodenteilraum. Typischerweise verlassen dann die gasförmigen Komponenten der Reaktion die Elektrolysezelle über einen Ausgang aus dem zweiten Kathodenteilraum und der Katholyt über einen Ausgang aus dem ersten Kathodenteilraum.

Besonders vorteilhaft kann der pH-Effekt des Katholyts und des Anolyts unterstützt werden, indem die Umpumprate des Elektrolyten auf eine niedrige Verweilzeit in der Kohlenstoffdioxid-Elektrolysezelle eingestellt ist. Dadurch wird die pH-Different von Anolyt und Katholyt noch weiter erhöht.

Ein Anstieg des pH-Wertes des Katholyts kann weiterhin durch die Wahl der Betriebsparameter und durch ein geeignetes Design der Kohlenstoffdioxid-Elektrolysezelle erhöht werden. Mögliche Einstellgrößen zum Erhöhen des pH-Wert-Anstiegs des Katholyts können sein: Die Geometrie der Elektrolysezellen, die Spaltbreite im Kathodenraum zwischen der Kathode und der Membran, die Transportwiderstände der Ionen in wässriger Lösung durch Auswahl des Leitsalzes, sowie die Verfügbarkeit des Kohlenstoffdioxids an der Kathode.

Vorteilhaft erfolgt die Absorption des nicht umgesetzten Kohlenstoffdioxids in der Gaswäschevorrichtung. Es ist dabei auch möglich, den basischen Katholyt und das Produktgas aus den zwei getrennten Leitungen in eine gemeinsame Leitung zu führen, so dass die Absorption bereits in dieser gemeinsamen Leitung stattfinden kann. In diesem Fall ist die Gaswäschevorrichtung demnach lediglich als eine Leitung ausgebildet sein, wobei weitere Ausgestaltungen zum Verbesserun des Durchmischens der beiden Phasen, insbesondere ein statischer Mischer, zweckmäßig sind.

In einer vorteilhaften Ausgestaltung und Weiterbildung der Erfindung wird der erste Elektrolyt aus einem Regenerationsbehälter als ein erster Anolyt in den Anodenraum geführt. Der pH-Effekt wird vorteilhaft unterstützt, wenn der erste Elektrolyt sowohl als erster Katholyt als auch als erster Anolyt verwendet wird. Zweckmäßigerweise führt eine dritte Leitung von dem Regenerationsbehälter in den ersten Anodenraum.

In einer weiteren vorteilhaften Ausgestaltung und Weiterbildung der Erfindung werden nach der Elektrolysezelle und der Gaswäschevorrichtung der Katholyt und der Anolyt in dem Regenerationsbehälter zusammengeführt, um die immer größer werdende Diskrepanz zwischen dem pH-Wert der Kathoden- und Anodenseite wieder auszugleichen. So ist es vorteilhaft möglich einen stationären Elektrolyseprozess mit einem konstanten pH-Wert im Regenerationsbehälter durchzuführen. Vorteilhaft wird der Einsatz eines zusätzlichen Absorptionsmittels in diesem Verfahren vermieden. In dem Regenerationsbehälter wird das gebundene Kohlenstoffdioxid wieder frei gesetzt und zeitgleich der pH-Wert wieder regeneriert. Unter Regeneration wird hierbei verstanden, dass ein Ausgleich des pH-Werts des ersten Katholyts und des ersten Anolyts erfolgt. Insbesondere beträgt der pH-Wert nach einer Regeneration 8 bis 10.

Zweckmäßigerweise umfasst die Vorrichtung dann eine achte Leitung von der Gaswäschevorrichtung zum Regenerationsbehälter zum Führen des ersten Katholyts und eine neunte Leitung von dem ersten Anodenraum in den Regenerationsbehälter.

In einer weiteren vorteilhaften Ausgestaltung und Weiterbildung der Erfindung umfasst das Produktgas Kohlenstoffmonoxid und/oder Ethen und/oder Methan und/oder Ethan. Vorteilhaft können diese Produkte als Ausgangsstoff für chemische Synthesen eingesetzt werden. Vorteilhaft wird also Kohlenstoffdioxid elektrochemisch zu einem Wertstoff umgewandelt.

In einer weiteren vorteilhaften Ausgestaltung und Weiterbildung der Erfindung wird das im Regenerationsbehälter freigesetzte Kohlenstoffdioxid in die Kohlenstoffdioxid-Elektrolysezelle als Edukt zurückgeführt. Vorteilhaft wird somit der CO₂-Nutzungsgrad der Kohlenstoffdioxid-Elektrolysezelle erhöht, da das Kohlenstoffdioxid, das nicht in einem ersten Zyklus umgesetzt wurde, im nächsten Zyklus umgesetzt werden kann.

In einer vorteilhaften Ausgestaltung und Weiterbildung der Erfindung wird als Elektrolyt ein Kalium und/oder ein Ammonium umfassender Elektrolyt, insbesondere ein Kaliumsulfat, verwendet. Diese Elektrolyten erhöhen vorteilhaft die Leitfähigkeit des Katholyts oder Anolyts bei nahezu nicht pHpuffernden Eigenschaften. Sie ermöglichen daher das Wandern der Protonen über die Membran und somit auch das Verändern des pH-Werts des Anolyts und des Katholyts in dem jeweiligen Anoden- bzw. Kathodenraum. Es sind ebenso weitere Stoffklassen als Elektrolyten einesetzbar. Insbesondere auch die Alkalimetalle Lithium, Natrium, Rubidium oder Cäsium können als Elektrolyt verwendet werden. Als Anionen des Elektrolyts, bzw. Leitsalzes, können insbesondere Halogenide oder Phosphate verwendet werden.

In einer weiteren vorteilhaften Ausgestaltung und Weiterbildung der Erfindung umfasst die Vorrichtung eine sechste Leitung zum Regenerationsbehälter zu einem Einlass des zweiten Kathodenteilraumes, um das Kohlenstoffdioxid vom Regenerationsbehälter in die Kohlenstoffdioxid-Elektrolysezelle zurückzuführen.

In einer weiteren vorteilhaften Ausgestaltung und Weiterbildung ist die Kathode eine Gasdiffusionselektrode. Mit der Gasdiffusionselektrode ist es besonders vorteilhaft möglich, die Reaktion des Eduktgases Kohlenstoffdioxid mit dem flüssigen Katholyten an der Oberfläche der Elektrode ablaufen zu lassen und anschließend Gas und flüssige Phase getrennt voneinander aus einer Elektrolysezelle zu führen.

In einer weiteren vorteilhaften Ausgestaltung und Weiterbildung der Erfindung umfasst die Gaswäschevorrichtung Füllkörper oder eine Packung. Durch diese Einbauten wird die Grenzfläche zwischen dem abzutrennenden Kohlenstoffdioxid und dem Absorptionsmittel, also dem Katholyt, vorteilhaft vergrößert, wodurch sich das thermodynamische Gleichgewicht schneller einstellen kann. Es ist ebenso ein Versprühen des Absorptionsmittels in einer Gasphase denkbar, um die Oberfläche zwischen den beiden Phasen möglichst groß zu gestalten.

Weitere Ausgestaltungsformen und weitere Merkmale der Erfindung werden anhand der folgenden Figuren näher erläutert. Dabei handelt es sich um rein beispielhafte Ausgestaltungsformen und Merkmalskombinationen die keine Einschränkung des Schutzbereiches bedeuten. Merkmale mit derselben Wirkungsweise und derselben Bezeichnung, aber in unterschiedlichen Ausgestaltungsformen werden dabei mit denselben Bezugszeichen versehen.

Dabei zeigt:

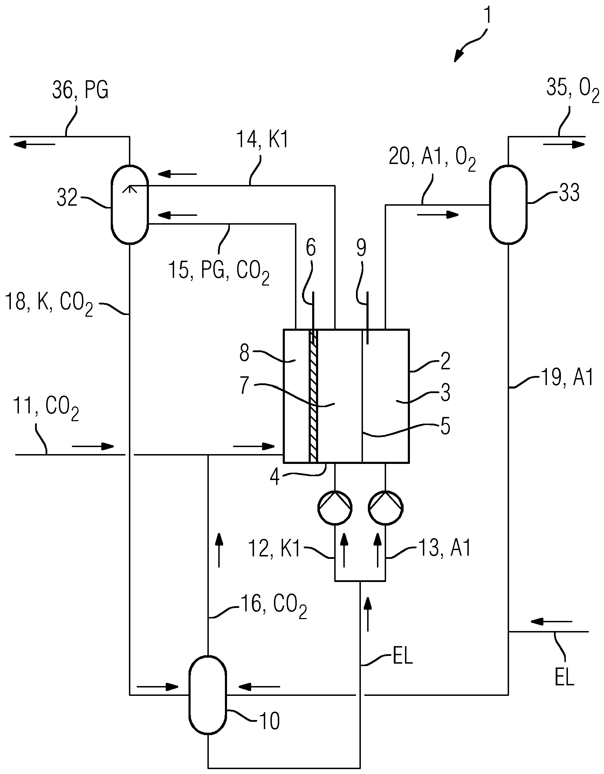

- Figur 1: eine Kohlenstoffdioxid-Elektrolysezelle mit einer Gaswäschevorrichtung und zwei getrennten Leitungen.

In diesem Ausführungsbeispiel umfasst die Elektrolysevorrichtung 1 eine Kohlenstoffdioxid-Elektrolysezelle 2. Die Kohlenstoffdioxid-Elektrolysezelle 2 umfasst eine erste Membran 5, auf die eine erste Anode 9 direkt aufgebracht ist. Die Membran 5 teilt die Elektrolysezelle in einen ersten Anodenraum 3 und einen ersten Kathodenraum 4. Die erste Kathode 6 ist zwischen einem ersten Kathodenteilraum 7 und einem zweiten Kathodenteilraum 8 angeordnet. Die erste Kathode 6 trennt diese beiden Räume vollständig voneinander. Insbesondere ist die erste Kathode 6 flächig ausgestaltet, um die beiden Kathodenteilräume 7 und 8 vollständig voneinander zu trennen.

In einem Regenerationsbehälter 10 liegt ein wässriger Elektrolyt EL vor. Typischerweise umfasst dieser wässrige Elektrolyt EL ein Salz, insbesondere Kaliumsulfat K₂SO₄ oder Kaliumhydrogencarbonat KHCO₃. Der wässrige Elektrolyt kann aber auch weitere Sulfate, Hydrogencarbonate oder Phosphate umfassen. In diesem Beispiel umfasst der wässrige Elektrolyt EL 1 mol/l Kaliumhydrogencarbonat.

Kohlenstoffdioxid CO₂ wird über eine erste Leitung 11 in den zweiten Kathodenteilraum 8 geführt. Ein erster Katholyt K1 wird aus dem Regenerationsbehälter 10 in den ersten Kathodenteilraum 7 geführt. Ein weiterer Anteil dieses Elektrolyten EL wird als erster Anolyt A1 über eine dritte Leitung 13 in den ersten Anodenraum 3 geführt. Zweckmäßigerweise verfügt die Kohlenstoffdioxid-Elektrolysezelle 2 über eine Spannungsquelle.

Während der Elektrolyse wird das Kohlenstoffdioxid CO₂ an der ersten Kathode 6 zu Kohlenstoffmonoxid CO reduziert. Die erste Kathode 6 ist typischerweise eine Gasdiffusionselektrode. In diese kann der Katholyt K1 aus der ersten Kathodenteilraum 7 in Kontakt mit dem zu reduzierenden Kohlenstoffdioxid CO₂ treten. An der ersten Anode 9 wird Wasser zu Sauerstoff oxidiert. Es werden derzeit nur 30 bis 70% des Kohlenstoffdioxids CO₂ elektrochemisch umgesetzt. Daher enthält das Produktgas PG sowohl Kohlenstoffmonoxid CO als auch nicht reduziertes Kohlenstoffdioxid CO₂.

Das Produktgas wird nach der Elektrolyse über die fünfte Leitung 15 in eine Gaswäschevorrichtung 32 geführt. Der erste Katholyt K1 wird über eine vierte Leitung von der Kohlenstoffdioxid-Elektrolysezelle 2 zu der Gaswäschevorrichtung 32 geführt. Das Führen vom ersten Katholyt K1 und Produktgas PG erfolgt getrennt voneinander. In der Gaswäschevorrichtung 32 werden die Gas und die Flüssigphase in Kontakt zueinander gebracht. Um den Stoffaustausch der Phasen zu erhöhen, kann die Gaswäschevorrichtung 32 vorteilhaft mit Füllkörpern gefüllt sein oder eine Packung umfassen. Weiterhin ist ein Versprühen des ersten Katholyts K1 in das Produktgas PG möglich.

In der Gaswäschevorrichtung 32 wird der basische Katholyt K1 als Absorptionsmittel für das nicht reduzierte Kohlenstoffdioxid CO₂ eingesetzt. Durch das getrennte Führen des basischen ersten Katholyts K1 und des Produktgases PG stellt sich erst in der Gaswäschevorrichtung 32 ein thermodynamisches Gleichgewicht ein. Bei diesem wird das nicht reduzierte Kohlenstoffdioxid CO₂ in dem Katholyten K1 angereichert. Der mit Kohlenstoffdioxid CO₂ angereicherte Katholyt K1 verlässt nun über eine achte Leitung 18 die Gaswäschevorrichtung 32 zurück zum Regenerationsbehälter 10.

Das an der ersten Anode A1 entstehende Anodengas, Sauerstoff, verlässt über eine zehnte Leitung 20 den Anodenraum 3 zu einer zweiten Abtrennvorrichtung 33. In der zweiten Abtrennvorrichtung 33 wird der Sauerstoff O₂ von dem Anolyt A1 getrennt. Der Sauerstoff verlässt über eine zwölfte Leitung 35 die Elektrolysevorrichtung 1. Der erste Anolyt A1 wird über eine neunte Leitung 19 zurück in den Regenerationsbehälter 10 geführt. Das Produktgas PG verlässt über eine dreizehnte Leitung 36 die Elektrolysevorrichtung 1.

In dem Regenerationsbehälter 10 erfolgt eine Regeneration des ersten Anolyts A1 und des ersten Katholyts K1. Dabei stellt sich insbesondere ein pH-Wert in einem Bereich zwischen 8 und 10 ein. Das gebundene Kohlenstoffdioxid CO₂ wird während der Regeneration aus dem ersten Katholyt K1 freigesetzt und kann über eine sechste Leitung 16 zurück in die Elektrolysezelle 2 geführt werden. Der regenerierte Elektrolyt EL wird anschließend wiederum zurück in den Anoden- und Kathodenraum 7, 8 als erster Katholyt K1 und zweiter Anolyt A1 geführt.

## Patentansprüche

1. Verfahren zur elektrochemischen Nutzung von Kohlenstoffdioxid (CO₂)umfassend folgende Schritte:
- Bereitstellen einer Kohlenstoffdioxid-Elektrolysezelle (2) mit einem ersten Anodenraum (3) und einem ersten Kathodenraum (4), wobei der erste Anodenraum (3) und der erste Kathodenraum (4) von einer ersten Membran (5) getrennt werden, wobei eine erste Kathode (6) derart im ersten Kathodenraum (4) angeordnet ist, dass sie einen ersten Kathodenteilraum (7) und einen zweiten Kathodenteilraum (8) trennt, wobei der erste Kathodenteilraum (7) an die erste Membran (5) grenzt,
- Führen eines ersten Elektrolyten (EL) als erster Katholyt (K1) in den ersten Kathodenteilraum (7),
- Führen des Kohlenstoffdioxids (CO₂) in den zweiten Kathodenteilraum (8),
- Reduzieren des Kohlenstoffdioxids (CO₂) zu einem ersten Produktgas (PG) in dem zweiten Kathodenteilraum (8),
- Herausführen des ersten Katholyts (K1) aus dem ersten Kathodenteilraum (7) und des Produktgases (PG) aus dem zweiten Kathodenteilraum (8) getrennt voneinander,
- Zusammenführen des ersten Produktgases (PG) und des ersten Katholyts (K1) nach der Kohlenstoffdioxid-Elektrolysezelle (2),
- Abtrennen von nicht reduziertem Kohlenstoffdioxid (CO₂) vom ersten Produktgas (PG) mittels des ersten Katholyts (K1) als Absorptionsmittel.

2. Verfahren nach Anspruch 1, wobei das erste Produktgas (PG) und der erste Katholyt (K1) in einer Gaswäschevorrichtung (32) zusammengeführt werden.

3. Verfahren nach einem der Ansprüche 1 oder 2, wobei der erste Elektrolyt (EL) auch als ein erster Anolyt (A1) in den Anodenraum (3) aus einem Regenerationsbehälter (10) geführt wird.

4. Verfahren nach Anspruch 3, wobei der während der Reduktion des Kohlenstoffdioxids (CO₂) basisch gewordene erste Katholyt (K1) und der während der Reduktion des Kohlenstoffdioxids (CO₂) sauer gewordenen erste Anolyt (A1) in den Regenerationsbehälter (10) zurückgeführt werden.

5. Verfahren nach einem der vorhergehenden Ansprüche, wobei das Produktgas (PG) Kohlenstoffmonoxid (CO) und/oder Ethen und/oder Methan und/oder Ethan umfasst.

6. Verfahren nach einem der Ansprüche 3 bis 5, bei dem das im Regenerationsbehälter (10) freigesetzte Kohlenstoffdioxid (CO₂) in die Kohlenstoffdioxid-Elektrolysezelle (2) zurückgeführt wird.

7. Verfahren nach einem der vorhergehenden Ansprüche, wobei als Elektrolyt (EL) ein Kalium und/oder Ammonium umfassender Elektrolyt (EL), insbesondere ein Kaliumsulfat, verwendet wird.

8. Vorrichtung (1) zur elektrochemischen Nutzung von Kohlenstoffdioxid (CO₂) umfassend:
- eine Kohlenstoffdioxid-Elektrolysezelle (2) zum Reduzieren von Kohlenstoffdioxid (CO₂) zu einem ersten Produktgas (PG), wobei die Kohlenstoffdioxid-Elektrolysezelle (2) einen ersten Anodenraum (3) und einen ersten Kathodenraum (4) umfasst, wobei zwischen dem ersten Anodenraum (3) und dem ersten Kathodenraum (4) eine erste Membran (5) angeordnet ist und wobei in dem ersten Kathodenraum (4) eine flächige Kathode einen ersten (7) von einem zweiten Kathodenteilraum (8) trennt, wobei der erste Kathodenteilraum (7) an die erste Membran (5) grenzt,
- eine erste Leitung (11) in den zweiten Kathodenteilraum (8) zum Führen des Kohlenstoffdioxids (CO₂) in den zweiten Kathodenteilraum (8),
- eine zweite Leitung (12) in den ersten Kathodenteilraum (7) zum Führen eines ersten Elektrolyten (EL) als erster Katholyt (K1),
- eine vierte Leitung (14) vom ersten Kathodenteilraum (7) in eine Gaswäschevorrichtung (32) zum Führen des ersten Katholyts (K1),
- eine fünfte Leitung (15) vom zweiten Kathodenteilraum (8) zur Gaswäschevorrichtung (32) zum Führen des ersten Produktgases (PG) mit nicht reduziertem Kohlenstoffdioxid (CO₂) separat vom ersten Katholyt (K1) in die Gaswäschevorrichtung (32),
- die Gaswäschevorrichtung (32) zum Abtrennen des nicht reduzierten Kohlenstoffdioxids (CO₂)vom ersten Produktgas (PG) mittels des ersten Katholyts (K1).

9. Vorrichtung (1) nach Anspruch 8 mit einer dritten Leitung (13) von einem Regenerationsbehälter (10) in den ersten Anodenraum (3) zum Führen des ersten Elektrolyten (EL) als erster Anolyt (A1) und der zweiten Leitung (12) von dem Regenerationsbehälter (10) in den ersten Kathodenteilraum (7).

10. Vorrichtung (1) nach Anspruch 9 mit einer achten Leitung (18) von der Gaswäschevorrichtung (32) zum Regenerationsbehälter (10) zum Führen des ersten Katholyts (K1) und/oder einer neunte Leitung (19) vom Anodenraum (3) in den Regenerationsbehälter (10) zum Führen des ersten Anolyts (A1).

11. Vorrichtung (1) nach einem der Ansprüche 9 oder 10 mit einer sechsten Leitung (16) vom Regenerationsbehälter (10) zu einem Einlass des zweiten Kathodenteilraums (8) zum Zurückführen des Kohlenstoffdioxids (CO₂) vom Regenerationsbehälter (10) in die Kohlenstoffdioxid-Elektrolysezelle (2).

12. Vorrichtung (1) nach einem der Ansprüche 8 bis 11, wobei die erste Kathode (6) eine Gasdiffusionselektrode ist.

13. Vorrichtung (1) nach einem der Ansprüche 8 bis 12, wobei die Gaswäschevorrichtung (32) Füllkörper oder eine Packung umfasst.

## Claims

1. Method of electrochemical utilization of carbon dioxide (CO₂), comprising the following steps:
- providing a carbon dioxide electrolysis cell (2) having a first anode space (3) and a first cathode space (4), where the first anode space (3) and the first cathode space (4) are separated by a first membrane (5), where a first cathode (6) is arranged within the first cathode space (4) such that it separates a first cathode subspace (7) and a second cathode subspace (8), where the first cathode subspace (7) adjoins the first membrane (5),
- guiding a first electrolyte (EL) as first catholyte (K1) into the first cathode subspace (7),
- guiding the carbon dioxide (CO₂) into the second cathode subspace (8),
- reducing the carbon dioxide (CO₂) to a first product gas (PG) in the second cathode subspace (8),
- conducting the first catholyte (K1) out of the first cathode subspace (7) and the product gas (PG) out of the second cathode subspace (8) separately from one another,
- combining the first product gas (PG) and the first catholyte (K1) downstream of the carbon dioxide electrolysis cell (2),
- separating non-reduced carbon dioxide (CO₂) from the first product gas (PG) by means of the first catholyte (K1) as absorbent.

2. Method according to Claim 1, wherein the first product gas (PG) and the first catholyte (K1) are combined in a gas scrubbing apparatus (32).

3. Method according to either of Claims 1 and 2, wherein the first electrolyte (EL) is also guided as a first anolyte (A1) into the anode space (3) from a regeneration vessel (10).

4. Method according to Claim 3, wherein the first catholyte (K1) that has basified during the reduction of the carbon dioxide (CO₂) and the first anolyte (A1) that has been acidified during the reduction of the carbon dioxide (CO₂) are returned to the regeneration vessel (10).

5. Method according to any of the preceding claims, wherein the product gas (PG) comprises carbon monoxide (CO) and/or ethene and/or methane and/or ethane.

6. Method according to any of Claims 3 to 5, in which the carbon dioxide (CO₂) released in the regeneration vessel (10) is returned to the carbon dioxide electrolysis cell (2).

7. Method according to any of the preceding claims, wherein the electrolyte (EL) used is an electrolyte (EL) comprising potassium and/or ammonium, especially a potassium sulfate.

8. Apparatus (1) for electrochemical utilization of carbon dioxide (CO₂), comprising:
- a carbon dioxide electrolysis cell (2) for reducing carbon dioxide (CO₂) to a first product gas (PG), where the carbon dioxide electrolysis cell (2) comprises a first anode space (3) and a first cathode space (4), where a first membrane (5) is arranged between the first anode space (3) and the first cathode space (4) and where a two-dimensional cathode in the first cathode space (4) separates a first cathode subspace (7) from a second cathode subspace (8), where the first cathode subspace (7) adjoins the first membrane (5),
- a first conduit (11) into the second cathode subspace (8) for guiding the carbon dioxide (CO₂) into the second cathode subspace (8),
- a second conduit (12) into the first cathode subspace (7) for guiding a first electrolyte (EL) as the first catholyte (K1),
- a fourth conduit (14) from the first cathode subspace (7) into a gas scrubbing apparatus (32) for guiding the first catholyte (K1),
- a fifth conduit (15) from the second cathode subspace (8) to the gas scrubbing apparatus (32) for guiding the first product gas (PG) comprising non-reduced carbon dioxide (CO₂) into the gas scrubbing apparatus (32) separately from the first catholyte (K1),
- the gas scrubbing apparatus (32) for separating the non-reduced carbon dioxide (CO₂) from the first product gas (PG) by means of the first catholyte (K1).

9. Apparatus (1) according to Claim 8 having a third conduit (13) from a regeneration vessel (10) into the first anode space (3) for guiding the first electrolyte (EL) as the first anolyte (A1) and the second conduit (12) from the regeneration vessel (10) into the first cathode subspace (7).

10. Apparatus (1) according to Claim 9 having an eighth conduit (18) from the gas scrubbing apparatus (32) to the regeneration vessel (10) for guiding the first catholyte (K1) and/or a ninth conduit (19) from the anode space (3) into the regeneration vessel (10) for guiding the first anolyte (A1).

11. Apparatus (1) according to either of Claims 9 and 10 having a sixth conduit (16) from the regeneration vessel (10) to an inlet of the second cathode space (8) for returning the carbon dioxide (CO₂) from the regeneration vessel (10) into the carbon dioxide electrolysis cell (2).

12. Apparatus (1) according to any of Claims 8 to 11, wherein the first cathode (6) is a gas diffusion electrode.

13. Apparatus (1) according to any of Claims 8 to 12, wherein the gas scrubbing apparatus (32) comprises random packings or a structured packing.

## Revendications

1. Procédé d'utilisation électrochimique de dioxyde de carbone (CO₂), comprenant les stades suivants :
- on se procure une cellule (2) d'électrolyse du dioxyde de carbone ayant un premier compartiment (3) anodique et un premier compartiment (4) cathodique, le premier compartiment (3) anodique et le premier compartiment (4) cathodique étant séparés par une première membrane (5), dans lequel une première cathode (6) est disposée dans le premier compartiment (4) cathodique, de manière à séparer un premier compartiment (7) partiel cathodique et un deuxième compartiment (8) partiel cathodique, le premier compartiment (7) partiel cathodique étant voisin de la première membrane (5),
- on envoie un premier électrolyte (EL) comme premier catholyte (K1) dans le premier compartiment (7) partiel cathodique,
- on envoie le dioxyde de carbone (CO₂) dans le deuxième compartiment (8) partiel cathodique,
- on réduit le dioxyde de carbone (CO₂) en un premier produit (PG) gazeux dans le deuxième compartiment (8) partiel cathodique,
- on sort le premier catholyte (K1) du premier compartiment (7) partiel cathodique et le premier produit (PG) gazeux du deuxième compartiment (8) partiel cathodique, séparément l'un de l'autre,
- on réunit le premier produit (PG) gazeux et le premier catholyte (K1) après la cellule (2) d'électrolyse du dioxyde de carbone,
- on sépare du dioxyde de carbone (CO₂) non réduit du premier produit (PG) gazeux au moyen du premier catholyte (K1) comme agent d'absorption.

2. Procédé suivant la revendication 1, dans lequel on réunit le premier produit (PG) gazeux et le premier catholyte (K1) dans une installation (32) de lavage de gaz.

3. Procédé suivant l'une des revendications 1 ou 2, dans lequel on envoie le premier électrolyte (EL) également comme premier anolyte (A1) dans le compartiment (3) anodique, à partir d'un récipient (10) de régénération.

4. Procédé suivant la revendication 3, dans lequel on retourne, au récipient (10) de régénération, le premier catholyte (K1) devenu basique pendant la réduction du dioxyde de carbone (CO₂) et le premier anolyte (A1) devenu acide pendant la réduction du dioxyde de carbone (CO₂).

5. Procédé suivant l'une des revendications précédentes, dans lequel le produit (PG) gazeux comprend du monoxyde de carbone (CO) et/ou de l'éthylène et/ou du méthane et/ou de l'éthane.

6. Procédé suivant l'une des revendications 3 à 5, dans lequel on retourne, à la cellule (2) d'électrolyse du dioxyde de carbone, le dioxyde de carbone (CO₂) libéré dans le récipient (10) de régénération.

7. Procédé suivant l'une des revendications précédentes, dans lequel on utilise comme électrolyte (EL) un électrolyte (EL) comprenant du potassium et/ou de l'ammonium, notamment un sulfate de potassium.

8. Installation (1) d'utilisation électrochimique de dioxyde de carbone (CO₂), comprenant
- une cellule (2) d'électrolyse du dioxyde de carbone pour réduite du dioxyde de carbone (CO₂) en un premier produit (PG) gazeux, la cellule (2) d'électrolyse du dioxyde de carbone comprenant un premier compartiment (3) anodique et un premier compartiment (4) cathodique, dans laquelle une première membrane (5) est disposée entre le premier compartiment (3) anodique et le premier compartiment (4) cathodique et dans laquelle, dans le premier compartiment (4) cathodique, un cathode plate sépare un premier (7) d'un deuxième compartiment (8) partiel cathodique, le premier compartiment (7) partiel cathodique étant voisin de la première membrane (5),
- un premier conduit (11) dans le deuxième compartiment (8) partiel cathodique pour envoyer le dioxyde de carbone (CO₂) dans le deuxième compartiment (8) partiel cathodique,
- un deuxième conduit (12) dans le premier compartiment (7) partiel cathodique pour envoyer un premier électrolyte (El) comme premier catholyte (K1),
- un quatrième conduit (14) allant du premier compartiment (7) partiel cathodique à l'installation (32) de lavage de gaz pour conduire le premier catholyte (K1),
- un cinquième conduit (15) allant du deuxième compartiment (8) partiel cathodique à l'installation (32) de lavage de gaz pour conduire le premier produit (PG) gazeux avec du dioxyde de carbone (CO₂) non réduit, indépendamment du premier catholyte (K1), à l'installation (32) de lavage de gaz,
- l'installation (32) de lavage de gaz pour séparer le dioxyde de carbone (CO₂) non réduit du premier produit (PG) gazeux au moyen du premier catholyte (K1).

9. Installation (1) suivant la revendication 8, comprenant un troisième conduit (13) allant d'un récipient (10) de régénération au premier compartiment (3) anodique pour conduire le premier électrolyte (EL) comme premier anolyte (A1) et le deuxième conduit (12) allant du récipient (10) de régénération au premier compartiment (7) partiel cathodique.

10. Installation (1) suivant la revendication 9, comprenant un huitième conduit (18) allant de l'installation (32) de lavage de gaz au récipient (10) de régénération pour conduire le premier catholyte (K1) et/ou un neuvième conduit (19) allant du compartiment (3) anodique au récipient (10) de régénération pour conduire le premier anolyte (A1).

11. Installation (1) suivant l'une des revendications 9 ou 10, comprenant un sixième conduit (16) allant du récipient (10) de régénération à une entrée du deuxième compartiment (8) partiel cathodique pour retourner le dioxyde de carbone (CO₂) du récipient (10) de régénération à la cellule (2) d'électrolyse du dioxyde de carbone.

12. Installation (1) suivant l'une des revendications 8 à 11, dans laquelle la première cathode (6) est une électrode à diffusion de gaz.

13. Installation (1) suivant l'une des revendications 8 à 12, dans laquelle l'installation (32) de lavage de gaz comprend des corps de charge ou un empilement.
